# EUROPEAN PATENT APPLICATION

(11) **EP 1 582 096 A1**
(43) Date of publication of application: **05.10.2005**
(21) Application number: 05102440.4
(22) Date of filing: 25.03.2005
(51) Int. Cl.: A01K 31/16, A01K 43/10

(54) **Device and method for coupling mother animal-dependant data to an egg**

(30) Priority: 29.03.2004 NL 1025840
(71) Applicant: A.H. Jansen Holding B.V., 3772 MC Barneveld (NL)
(72) Inventor: Rijksen, Rijk, 8075 PH, Elspeet (NL)
(74) Representative: Van den Heuvel, Henricus Theodorus

(57) **Abstract**

The invention relates to a device for coupling mother animal-dependent data to eggs, comprising: at least one laying location (3) for the laying of eggs by mother animals, an egg receiver (5) connecting to the laying location for receiving eggs, identification means for identification of mother animals which lay eggs at the laying location, marking means (14) connected to the identification means for coupling mother animal-dependent data to the eggs, and transport means (11) for bringing together the marking means and eggs received by the egg receiver. The invention also relates to a method for coupling mother animal-dependent data to eggs using such a device.

## Description

The invention relates to a device for coupling mother animal-dependent data to an egg, comprising: at least one laying location for the laying of eggs by mother animals, an egg receiver connecting to the laying location for receiving eggs, identification means for identification of mother animals which lay eggs at the laying location, marking means connected to the identification means for coupling mother animal-dependent data to the eggs, and transport means for bringing together the marking means and eggs received by the egg receiver. The invention also relates to a method for coupling mother animal-dependent data to eggs using such a device.

In the farming of poultry, such as chickens, turkeys and the like, it may be desirable to know which mother animal has laid a determined egg. The production process of eggs thus becomes better controllable. A simple method of achieving this is to couple mother animal-dependent data to the eggs. This takes place for instance by arranging markings, such as an identification code, on the egg.

In Netherlands patent publication NL 1005065 an automated device is described for coupling mother animal-dependent data to an egg. In such a device mother animals lay eggs in laying nests. The laying nest is closed off during laying of an egg by a determined mother animal, so that the mother animal cannot leave the nest and other mother animals cannot enter the relevant laying nest. It is hereby certain that the egg laid in the closed laying nest comes from the mother animal present in the laying nest at that moment. The mother animal is identified by identification means, for instance an antenna which reads a transponder connected to the mother animal, or a "vision system" which detects a code arranged on a mother animal. The egg laid by the identified mother animal is deposited on an endless conveyor. The endless conveyor is then activated and the egg is displaced to a printer. This printer is connected to the identification means, and prints a mother animal-dependent code on the egg. Before a determined laying nest is available for receiving an egg, the position on the endless conveyor associated with this laying nest must be available. This implies that the conveyor must be emptied at very regular intervals at all positions connecting to laying nests in use. This means in practice that the conveyor must be emptied for each period in which an egg can be laid. The useful capacity of the laying nests is hereby considerably limited because the access to the laying nests must be regulated such that a maximum of only one mother animal has access in each case to a laying nest per unit of time at which the conveyor is displaced.

The present invention has for its object to enable a more efficient use of laying nests while retaining the option of coupling mother animal-dependent data to an egg.

The invention provides for this purpose a device for coupling mother animal-dependent data to eggs, comprising: at least one laying location for the laying of eggs by mother animals, an egg receiver connecting to the laying location for receiving eggs, identification means for identification of the mother animals which lay eggs at the laying location, marking means connected to the identification means for coupling mother animal-dependent data to the eggs, and transport means for bringing together the marking means and eggs received by the egg receiver, characterized in that the egg receiver is adapted to hold at distinct positions a plurality of eggs laid at the laying location. Such a device provides the option of a plurality of eggs being successively laid at a determined laying location without the transport means having to be activated between the laying of successive eggs. The available capacity of a laying location hereby increases relative to a prior art laying location. According to the invention a plurality of eggs can after all be received in an egg receiver before activation of the transport means is necessary. In addition, the transport means need be activated less often, whereby noise nuisance for the mother animals is limited to a minimum. The eggs are held at distinct positions by the egg receiver such that it is known at all times which identified mother animal is coupled to an egg held at a determined distinct position. An egg receiver then co-acts with the marking means, wherein a coupling is established between an egg and the associated mother animal-dependent data. It is noted that the further processing of the eggs usually, though not necessarily, takes place in automated manner; it is also possible to perform the further processing of the eggs (partly) manually.

In a preferred embodiment, the device is provided with detection means for detecting eggs. The detection means can for instance be sensitive to pressure (exerted by an egg), or to electromagnetic radiation such as light. Many detection techniques and methods are known to a skilled person in the field. The detection means provide an increased certainty regarding the position of an egg in the device, which reduces the chance of errors in coupling mother animal-dependent data to an egg. An even greater reliability is obtained if the detection means are adapted to detect an egg at a distinct position in the egg receiver.

It is useful if the egg receiver is provided with at least two egg holders for receiving eggs. The greater the number of distinct positions of an egg holder, the less often the egg holder has to co-act with the marking means. The egg holders can for instance take the form of recesses, compartments, or other shapes suitable for positioning eggs.

In a preferred embodiment, the distinct positions are at least substantially separated from each other by at least one separating element. A separating element contributes toward an improved screening of the distinct positions. A separating element can for instance take the form of a threshold, raised zone, a partition or other obstacle preventing passage of an egg.

The device is preferably provided with guide means connecting the laying location to the egg receiver for the purpose of guiding an egg to a distinct position in the egg receiver. The guide means carry a laid egg to the egg receiver, whereby accuracy is increased. These guide means can be active as well as passive. Passive guide means comprise for instance an inclining surface, a guide rod, a chute, a funnel and so on. An egg can hereby be displaced by the force of gravity. It is also possible for different guide means to co-act.

It is advantageous if the device is provided with displaceable blocking means for blocking at least one distinct position of the egg receiver. Blocking means are adapted to selectively block or leave clear access to determined distinct positions of the egg receiver. Through use of blocking means an egg can be directed with even greater reliability to a desired distinct position of an egg receiver. Blocking means can further screen distinct positions which are already occupied by an egg, and thus prevent mutual contact of the eggs. The chance of damage to the eggs can also be limited if the blocking means are manufactured from, or covered with, shock-absorbing material. The blocking means can for instance be formed by flaps, rods or bumpers. The blocking means can furthermore be controlled, for instance by being displaced between an opened and a closed position. The blocking means can thus direct an egg to a specific distinct position, for instance by blocking all positions with the exception of one.

In a subsequent preferred embodiment, the egg receiver is adapted for successive arrangement of eggs depending on the time of laying. An example is a linear arrangement of eggs in an elongate egg holder, wherein the eggs are arranged successively in the holder.

It is advantageous if the identification means are connected to data-processing means. The data-processing means can be formed by a computer which is coupled to a database provided with mother animal-dependent data. Relatively extensive mother animal-dependent data can thus be stored, while the identification of the mother animal can be achieved with simple means such as a transponder or a simple chip. The data-processing means can also control other components of the device.

The laying location is preferably formed by a laying nest. Laying nests are particularly suitable for poultry. Many embodiments of laying nests are known, as described in, among others, patent NL 1005065. A laying nest can preferably be closed and adapted to contain one mother animal. A plurality of laying nests can be mutually coupled so that the transport means can be shared for an increased efficiency.

The transport means preferably comprise a transport path adapted to transport eggs. The transport path can for instance be formed by an endless conveyor belt on which the eggs are transported, for instance in compartments, to a storage location or hatching area. In a preferred embodiment the transport path carries the eggs past the marking means, for instance a printer which arranges the mother animal-dependent data on the eggs. The egg receivers can optionally be connected to the transport path or the laying locations.

The invention also comprises a method for coupling mother animal-dependent data to an egg using a device according to any of the foregoing claims, comprising the steps of: A) identifying a first mother animal which lays a first egg at the laying location, B) receiving the first egg in the egg receiver at a first distinct position of the egg receiver, C) repeating steps A) and B) such that a plurality of eggs are received in distinct positions of the egg receiver, and D) coupling mother animal-dependent data to the eggs received in the egg receiver by means of the marking means. It is thus not necessary to close the laying nest each time between the laying of two eggs in order to discharge a laid egg as according to the prior art, since it is known according to the present invention at which position of the egg receiver a determined egg is situated. It is hereby possible to use a laying nest more efficiently, since more eggs can be processed per unit of time than was previously possible. An advantage of the increased capacity is that more mother animals can be kept per laying nest per unit of time. This also implies that fewer laying nests are required for a determined population of mother animals. This is economically advantageous.

In a preferred embodiment, the method also comprises the processing step E) of: displacing the first egg and a second egg with the transport means to the marking means. A plurality of eggs is preferably transported simultaneously so that the transport means are used efficiently. The efficiency is increased still further if the eggs coming from different laying nests are transported simultaneously by the transport means.

The method preferably also comprises the processing step F) of: holding a plurality of eggs at distinct positions in the egg receiver. Holding of the eggs takes place in ordered manner such that the identity of each mother animal associated with a determined egg is known, and the chance of switching is precluded. By holding the eggs in the egg receiver for some time, during which time subsequent eggs can also be laid and received in the egg receiver, the discharge of the eggs, for instance to marking means, can take place in grouped manner, whereby the transport means are used more efficiently.

The invention will now be elucidated on the basis of several non-limitative exemplary embodiments.
Figures 1A and 1B shows a preferred embodiment of a device for coupling mother animal-dependent data to an egg.
Figure 2 shows an egg receiver for use in a device according to the invention.
Figure 3 shows an alternative embodiment of an egg receiver for use in a device according to the invention.
Figure 4 shows a second alternative embodiment of an egg receiver for use in a device according to the invention.
Figure 5 shows a third alternative embodiment of an egg receiver for use in a device according to the invention.

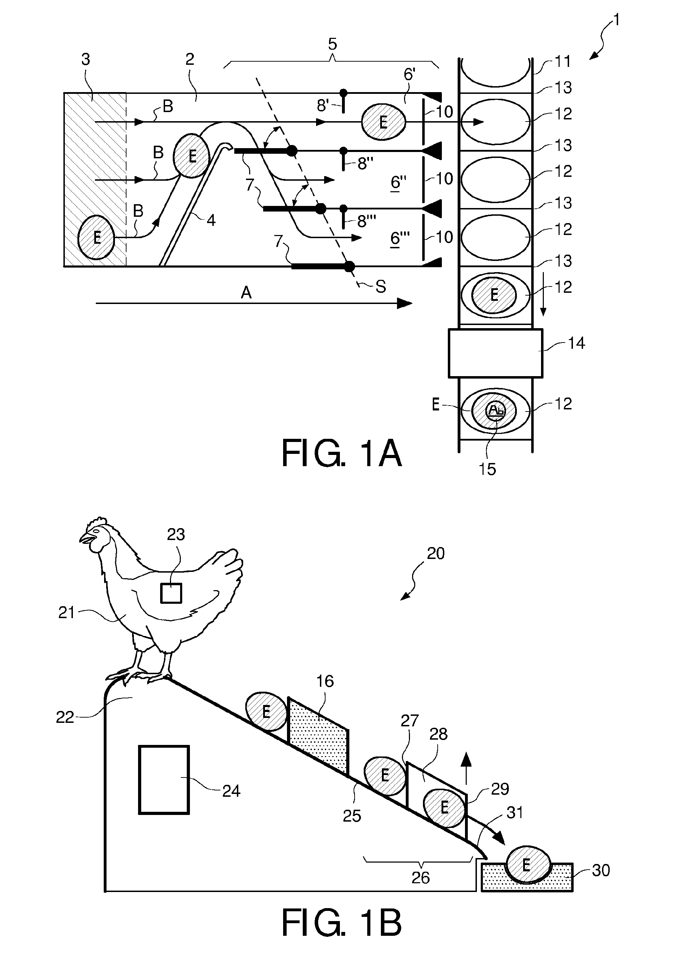

Figure 1A shows a top view of a preferred embodiment of a device 1 for coupling mother animal-dependent data to an egg E. The preferred embodiment shown here is particularly suitable for chickens. The device comprises a surface 2 which slopes downward in the direction of arrow A such that an egg E laid at a position in zone 3 of surface 2 rolls in the direction of arrow A due to the force of gravity. Placed under the inclining surface 2 is a receiver (not shown) which reads an identification transponder arranged in a chicken so as to identify the chicken which lays an egg E in zone 3. A guide element 4 is arranged on inclining surface 2, whereby a rolling egg E is guided to a desired position of surface 2, wherein arrows B indicate possible routes covered by egg E in zone 3. Guide element 4 guides egg E to egg receiver 5, which incorporates three receiving positions 6', 6", 6"' for eggs. Receiving positions 6', 6", 6"' can be individually closed by means of flaps 7', 7", 7"'. In the opened situation of flap 6' as shown in the figure, an egg E rolls into the first receiving position 6' of egg receiver 5. Each receiving position 6', 6", 6"' is provided with a sensor 8', 8", 8"' for detecting eggs E. When an egg E is detected in the first receiving position 6' by sensor 8', a computer (not shown) which is connected to sensors 8', 8", 8"', flaps 7', 7", 7"' and the receiver couples mother animal-dependent data of the chicken which laid egg E to the relevant receiving position 6' (and thus to the egg E lying therein). Receiving position 6' is closed by displacing flap 7' to a closing position (as according to dotted line S). Flap 7' is designed such that a subsequent egg E which is laid in zone 3 rolls along closed flap 7' and is received in the adjacent, still empty receiving position 6". The different receiving positions 6', 6", 6"' are adapted such that an egg E cannot move from the first receiving position 6' to the adjacent position 6". When the computer determines that all receiving positions 6', 6", 6"' are filled with eggs E, or when a determined preset time has passed, gates 10', 10", 10"' are opened, whereby eggs E are deposited from egg receiver 5 onto endless conveyor 11 connected to egg receiver 5.

Endless conveyor 11 is divided into recesses 12 for controlled receiving and positioning of a single egg E. Recesses 12 are mutually separated by elevations 13. Endless conveyor 11 is then activated so that eggs E are carried past a printer 14. Printer 14 is connected to the computer. Printer 14 prints eggs E with mother animal-dependent data 15, for instance a number or bar code of the mother animal which laid the relevant egg E.

Figure 1B shows a cross-section of a device 20 according to the invention similar to device 1 shown in figure 1A, in which a mother animal 21 lays an egg E at a laying position 22. Mother animal 21 is provided with a transponder 23, an output signal of which is recorded by a receiver 24 directed at laying position 22. Egg E rolls from an inclining surface 25 and is guided to an egg receiver 26 by means of a guide element 16. In this cross-section a flap 27 closes a receiving position 28 for an egg E such that a subsequently laid egg E rolls along flap 27 to an adjacent receiving position (not shown) which is not yet closed. Gate 29 can be opened so that an egg E can be deposited from receiving position 28 onto an endless conveyor 30 via a slope 31.

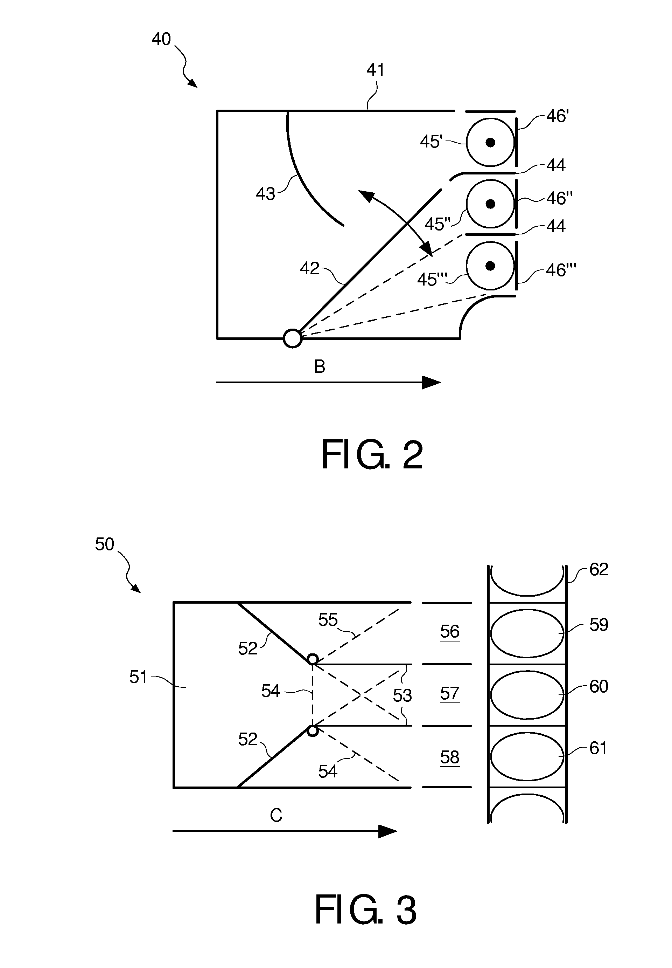

Figure 2 shows an egg receiver 40 for use in a device according to the invention. Egg receiver 40 comprises an inclining surface 41, which declines in the direction of arrow B and to which are fixed a movable guide element 42 and a fixed guide element 43. By displacing the movable guide element 42 an egg E rolling down the inclining surface 41 is guided in controlled manner to one of the three receiving positions 45', 45", 45"' separated from each other by partitions 44. Receiving positions 45', 45", 45"' are designed as light-sensitive switches 46', 46", 46"' such that an egg E received by for instance the first receiving position 45' covers the switch 46', whereby the presence of egg E is detected. Receiving positions 45', 45", 45"' are further provided with gates 46', 46", 46"' which can be opened to discharge eggs E from egg receiver 40, for instance to a conveyor belt as shown in figures 1A and 1B.

Figure 3 shows another type of egg receiver 50 for use in a device according to the invention. Egg receiver 50 is provided with an inclining surface 51 which declines in the direction of arrow C and over which an egg E can roll. The inclining surface 51 is equipped with two egg-guiding elements 52 which are oriented in a funnel shape which debouches in a pivotable guide 53. Pivotable guide 53 is provided with optical detection means 54 for detecting an egg passing through guide 53. Pivotable guide 53 can be positioned in different positions 54, 55 so that egg E is guided into one of the channels 56, 57, 58. Each of these channels 56, 57, 58 leads to a separate position on a conveyor belt 62 in which the eggs E can be held until the moment that conveyor belt 62 is activated and eggs E are discharged. Egg receiver 50 is therefore in fact integrated here with transport means 62. This has the advantage that a separate transfer step from an egg receiver to a conveyor as shown in figure 1A, 1B or 2 is not necessary, thereby reducing the chance of damage to eggs E.

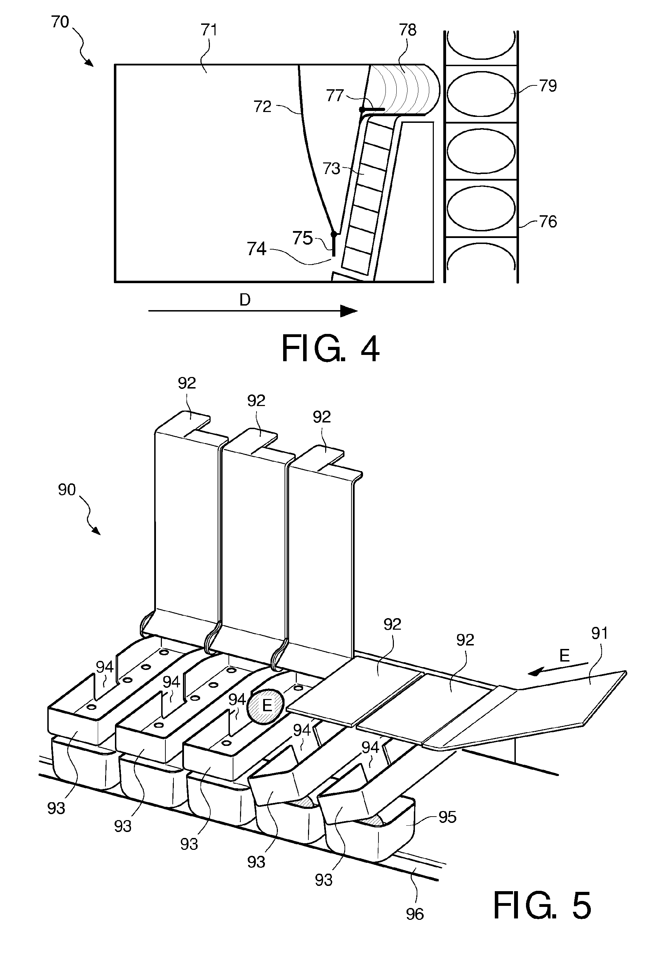

Figure 4 shows yet another type of egg receiver 70 for use in a device according to the invention. Egg receiver 70 is arranged on an inclining surface 71 (declining in the direction of arrow D) on which there is positioned a passive guide element 72 which is adapted to guide eggs E to a roller conveyor 73 on which the eggs E are temporarily stored. The entrance 74 to roller conveyor 73 is equipped with a first sensor 75 for detecting an egg E rolling onto roller conveyor 73. When an egg E is detected, roller conveyor 73 is temporarily activated. Roller conveyor 73 is adapted such that eggs E are ordered in laying sequence. Once a number of eggs E has been arranged on roller conveyor 73, eggs E are transferred from egg receiver 70 to an endless conveyor belt 76 for discharge of eggs E to for instance a printer (not shown). Roller conveyor 73 is herein activated each time until a second sensor 77 detects that an egg E is deposited via a downward sloping chute 78 into a compartment 79 of endless conveyor belt 76. Endless conveyor belt 76 is then advanced so that an empty compartment 79 is positioned in front of chute 78, whereafter a subsequent egg E can be deposited from egg receiver 70 onto conveyor belt 76. Eggs E are discharged when all eggs E have been deposited from egg receiver 70 onto conveyor belt 76. For coordinated co-action of the diverse components of egg receiver 70, the detection means 75, 77 and moving parts 73 incorporated in the device are mutually connected to control means, preferably a computer.

Figure 5 shows an egg receiver 90 for use in a device according to the invention. Eggs E roll from a laying position (not shown) to egg receiver 90 by means of an inclining surface 91 declining in the direction of arrow E. Egg receiver 90 is equipped with five movable flaps 92, three of which are shown in open position and two in closed position. In the closed position a flap 92 covers a receptacle 93 for receiving an egg E. When an egg E is received in a receptacle 93, the flap 92 associated with receptacle 93 closes the receptacle 93. A subsequent egg E will hereby roll over closed flap 92 and be received in an adjacent, still empty receptacle 93. Receptacles 93 are provided with detection means (not shown) for detecting an egg E. Alternatively it is also possible to use a single detection unit, wherein the receiving position of the laid egg E is derived from the position (open or closed) of flaps 92. If it is desired to discharge the received eggs E, receptacles 93 are then emptied by means of a tilting mechanism (not shown), wherein egg E is deposited through an outlet opening 94 of receptacle 93 into a compartment 95 of an endless conveyor 96, and then discharged.

## Claims

1. Device for coupling mother animal-dependent data to eggs, comprising:
- at least one laying location for the laying of eggs by mother animals,
- an egg receiver connecting to the laying location for receiving eggs,
- identification means for identification of the mother animals which lay eggs at the laying location,
- marking means connected to the identification means for coupling mother animal-dependent data to the eggs, and
- transport means for bringing together the marking means and eggs received by the egg receiver,
**characterized in that**
the egg receiver is adapted to hold at distinct positions a plurality of eggs laid at the laying location.

2. Device as claimed in claim 1, **characterized in that** the device is provided with detection means for detecting eggs.

3. Device as claimed in claim 2, **characterized in that** the detection means are adapted to detect the egg at a distinct position in the egg receiver.

4. Device as claimed in any of the foregoing claims, **characterized in that** the egg receiver is provided with at least two egg holders for receiving eggs.

5. Device as claimed in any of the foregoing claims, **characterized in that** the distinct positions are at least substantially separated from each other by at least one separating element.

6. Device as claimed in any of the foregoing claims, **characterized in that** the device is provided with guide means connecting the laying location to the egg receiver for the purpose of guiding the egg to a distinct position in the egg receiver.

7. Device as claimed in any of the foregoing claims, **characterized in that** the device is provided with displaceable blocking means for blocking at least one distinct position of the egg receiver.

8. Device as claimed in claim 7, **characterized in that** the blocking means are connected to control means.

9. Device as claimed in any of the foregoing claims, **characterized in that** the egg receiver is adapted for arrangement of eggs in time sequence of laying.

10. Device as claimed in any of the foregoing claims, **characterized in that** the identification means are connected to data-processing means.

11. Device as claimed in any of the foregoing claims, **characterized in that** the laying location is formed by a laying nest.

12. Device as claimed in any of the foregoing claims, **characterized in that** the transport means comprise a transport path adapted to transport eggs.

13. Device as claimed in claim 12, **characterized in that** the egg receiver is connected to the transport path.

14. Method for coupling mother animal-dependent data to eggs using a device as claimed in any of the foregoing claims, comprising the steps of:
A) identifying a first mother animal which lays a first egg at the laying location,
B) receiving the first egg in the egg receiver at a first distinct position of the egg receiver,
C) repeating steps A) and B) such that a plurality of eggs are received in distinct positions of the egg receiver, and
D) coupling mother animal-dependent data to the eggs received in the egg receiver by means of the marking means.

15. Method as claimed in claim 14, **characterized in that** the method also comprises the processing step E) of: displacing the first egg and the second egg with the transport means to the marking means.

16. Method as claimed in claim 14 or 15, **characterized in that** the method also comprises the processing step F) of: holding a plurality of eggs at distinct positions in the egg receiver.
